# EUROPÄISCHE PATENTSCHRIFT

(11) **EP 3 175 155 B1**
(45) Veröffentlichungstag und Bekanntmachung des Hinweises auf die Patenterteilung: **09.10.2019**
(21) Anmeldenummer: 15744204.7
(22) Anmeldetag: 29.07.2015
(51) Int. Cl.: F16J 15/34

(54) **ANORDNUNG ZUR WELLENDICHTUNG**
SHAFT SEALING ARRANGEMENT
DISPOSITIF D'ÉTANCHÉITÉ D'ARBRE

(30) Priorität: 30.07.2014 DE 102014214929
(43) Veröffentlichungstag der Anmeldung: 07.06.2017
(73) Patentinhaber: KSB SE & Co. KGaA, 67227 Frankenthal (DE)
(72) Erfinder: CHRISTIANS, Tim, 37431 Bad Lauterberg (DE); PENSLER, Thomas, 06179 Teutschenthal (DE); WIESNER, Hermann, 91275 Auerbach (DE)
(86) Internationale Anmeldenummer: PCT/EP2015/067377
(87) Internationale Veröffentlichungsnummer: WO 2016/016303

(56) Entgegenhaltungen:
- EP-A1- 2 687 715
- DE-A1- 10 017 668

## Beschreibung

Die Erfindung betrifft eine Anordnung zur Wellendichtung einer Kreiselpumpeneinheit.

Eine Wellendichtung ist eine Dichtung, die eine Kreiselpumpe an der Durchführung der rotierenden Pumpenwelle aus dem feststehenden Pumpengehäuse so abdichtet, dass der Leckverlust auf ein bestimmtes Maß reduziert und ein etwaiger Verschleiß der Dichtflächen so gering wie möglich wird.

Die Erfindung betrifft eine Wellendichtung, die Gleitring-Gegenring-Paarungen aufweist. Solche Gleitringdichtungen weisen einen Dichtspalt auf, der rechtwinklig zur Wellenachse steht. Wellendichtungen dieser Bauart werden auch als axiale oder hydrodynamische Gleitringdichtungen bezeichnet.

Als Gleitring wird der befederte Ring der Gleitring-Gegenring-Paarung bezeichnet. Der Gleitring ist axial verschieblich.

Man unterscheidet unterschiedliche Anordnungen von Gleitringdichtungen. In der "Back-to-Back"-Ausführung wird in den Raum zwischen den beiden Gleitringdichtungen ein Sperrmedium eingespeist, das im Druck über dem Druckniveau des abzudichtenden Fördermediums der Kreiselpumpe liegt. Die Sperrdruckvorlage sorgt dafür, dass keine Produktleckage in die Atmosphäre gelangt.

Bei einer Tandemdichtung wird der Raum zwischen den Dichtungen häufig von einer drucklosen Quenchflüssigkeit durchspült.

Aus der EP 2 687 715 A1 ist ein Unterwasserturbinengenerator bekannt, der zwei Gleitringeinheiten aufweist, die in Tandemanordnung zueinander positioniert sind.

Die DE 100 17 668 A1 offenbart ein aerodynamisches Abdichtsystem mit berührungslos arbeitenden Dichtkörpern, die eine Tandemanordnung aufweisen.

In der DE 199 28 141 A1 werden Dichtungsanordnungen beschrieben. Eine Variante zeigt Gleitringdichtungen in Tandemanordnung.

Doppeldichtungen kommen unter anderem bei Abwasserpumpen zum Einsatz. Die Pumpe wird durch zwei Gleitringdichtungen abgedichtet, die mit einer Flüssigkeit aus einer Vorlage geschmiert werden. Federelemente, die im dynamischen (rotierenden) Teil der Dichtungsanordnung platziert sind, erzeugen die benötigte Anpresskraft zwischen Gleitring und Gegenring. Durch den aufbaubedingt hohen Wellenüberhang treten in Schmutzwasserpumpen hohe Wellendurchbiegungen auf, die sich bei den Gleitringdichtungen herkömmlicher Bauart negativ auf die Standzeiten und die Abdichtung auswirken. Weiterhin gestaltet sich die Montage der bei herkömmlichen Doppeldichtungen benötigten Gleitringdichtungen aufwendig. Insbesondere bei Reparaturarbeiten bereiten offenliegende Gleitflächen Probleme.

Aufgabe der Erfindung ist es, eine Anordnung zur Wellendichtung einer Kreiselpumpeneinheit zu schaffen, die eine hohe Zuverlässigkeit und eine lange Lebensdauer aufweist. Zudem soll sich die Anordnung durch eine kompakte Bauweise auszeichnen. Sie soll zudem eine einfache Montage gewährleisten sowie bei Wartungsarbeiten gut zugänglich sein. Weiterhin soll sich die Anordnung zur Wellendichtung durch möglichst geringe Herstellungskosten auszeichnen.

Diese Aufgabe wird erfindungsgemäß gelöst durch ein in die Kreiselpumpeneinheit einschiebbares Doppeldichtungsmodul und eine in der Kreiselpumpeneinheit angeordnete Vorlage, wobei das Doppeldichtungsmodul eine erste Gleitring-Gegenring-Paarung und eine zweite Gleitring-Gegenring-Paarung aufweist, die Paarungen in Tandemanordnung zueinander positioniert sind und jeder Paarung ein Federelement zugeordnet ist zur Erzeugung einer Anpresskraft zwischen Gleitring und Gegenring, die Federelemente in stationären Bauteilen angeordnet sind und ein Raum zwischen den Gleitring-Gegenring-Paarungen mit einer Flüssigkeit aus der Vorlage durchspült wird.

Im Gegensatz zu herkömmlichen Dichtungen in Tandemanordnung wird bei der erfindungsgemäßen Anordnung ein Doppeldichtungsmodul mit zwei stationären Gleitringdichtungen eingesetzt. Dabei sind die Federelemente in stationären Bauteilen des Gleitringdichtungssystems angeordnet. Diese Bauteile führen keine Rotationsbewegung aus. Somit stehen die Federelemente still und verursachen keine zusätzlichen Vibrationen. Durch die stationäre Anordnung werden Einflüsse der Wellendurchbiegung auf die Standzeit und Dichtwirkung der Gleitringdichtung minimiert. Die erfindungsgemäße Kombination eines Moduls, einer Tandemanordnung und einer stationären Ausführung der beiden Gleitringdichtungen ermöglicht eine einfache und kostengünstige Montage des Moduls. Das erfindungsgemäße Doppeldichtungsmodul kann durch Einschieben der Einheit in die entsprechend vorbereitete Kreiselpumpe einfach montiert werden, ohne dass ein Risiko für die Gleitflächen besteht.

Durch den erfindungsgemäßen Einsatz von zwei stationären Gleitringdichtungen in Tandemanordnung wird, im Gegensatz zu bekannten Lösungen mit dynamischen Gleitringdichtungen in Tandemanordnung, die Toleranz der Abdichtung gegenüber Wellendurchbiegungen und damit die Zuverlässigkeit der Pumpenabdichtung erhöht. Im Gegensatz zu bekannten Lösungen mit Dichtungspatronen mit "face-to-face"-Anordnungen von stationären Gleitringdichtungen ist bei der erfindungsgemäß gewählten Tandemanordnung die Dichtfunktion der motorseitigen Gleitringdichtung des Doppeldichtungsmoduls auch bei einem Versagen der pumpenseitigen Gleitringdichtung noch gegeben.

Die Federelemente können in unterschiedlichen Bauweisen ausgeführt sein. So können beispielsweise Gruppenfedern als konzentrisch angeordnete Federpakete zum Einsatz kommen. Weiterhin ist der Einsatz von Metallfaltenbälgen oder Wellfedern als Federelemente denkbar. Auch kann ein aus einem Elastomer gefertigter Balg als Federelement zum Einsatz kommen.

Das erfindungsgemäße Doppeldichtungsmodul wird mit einer Flüssigkeit aus einer Vorlage geschmiert. Bei einer besonders günstigen Ausführung der Erfindung werden die Wände der Vorlage von Gehäuseteilen der Kreiselpumpeneinheit gebildet. Dabei erweist es sich als besonders günstig, wenn die Wände der Vorlage von einem Druckdeckel und einem Lagerträger der Kreiselpumpeneinheit gebildet werden.

Dadurch entsteht, im Gegensatz zu herkömmlichen Gleitringdichtungs-Patronen in Tandemanordnung, bei dem erfindungsgemäßen Gleitringdichtungs-Modul die Vorlage für die Flüssigkeit erst in Kombination mit umliegenden Bauteilen der Kreiselpumpe. Im Gegensatz zu herkömmlichen Patronen zur Wellendichtung ist somit die Flüssigkeitskammer kein integraler Bestandteil des Moduls an sich. Dies ermöglicht eine kompakte Bauweise und eine einfache Montage des Moduls.

Bei dem erfindungsgemäßen Modul wird durch die Gehäuseteile der Pumpe ein ausreichend großer Raum als Vorlage gebildet, der im Gegensatz zu herkömmlichen Patronen keine zusätzlichen Anschlüsse zur externen Versorgung mit einer Flüssigkeit benötigt.

Vorzugsweise ist die Vorlage in der Kreiselpumpeneinheit angeordnet. Somit werden im Gegensatz zu herkömmlichen Gleitringdichtungs-Patronen bei der erfindungsgemäßen Anordnung keine zusätzlichen Bauteile für die Vorlage der Flüssigkeit benötigt. Dagegen sind bei herkömmlichen Systemen Flüssigkeitsbehälter mit einer entsprechenden Apparatur erforderlich. Die erfindungsgemäße Konstruktion macht sowohl einen externen Vorlagebehälter entbehrlich als auch eine externe Versorgung mit Schmier- oder Sperrmittel. Die Flüssigkeitsvorlage zur Schmierung der beiden. Gleitringdichtungen ist komplett in die Kreiselpumpeneinheit integriert.

Vorzugsweise bildet das Modul einen Boden der Vorlage. Gemeinsam mit den Gehäuseteilen der Kreiselpumpeneinheit, welche die Wände bilden, wird dadurch ein Raum für die Vorlage der Flüssigkeit geschaffen, der vollständig in der Kreiselpumpe integriert ist. Dies bietet insbesondere auch aus Montagegründen erhebliche Vorteile, da das Doppeldichtungsmodul durch Einschieben der Einheit in die entsprechend vorbereitete Kreiselpumpe einfach eingebaut werden kann, ohne dass ein Risiko für die Gleitflächen besteht. Somit ist im Gegensatz zu bekannten Tandemdichtungen mit Flüssigkeitsvorlage bei der erfindungsgemäß gewählten Ausführung eine einfache Montage des Moduls in einem Arbeitsschritt möglich. Dabei liegen im Gegensatz zu herkömmlichen Patronendichtungen die Gleitflächen zu keinem Montagezeitpunkt offen und sind somit optimal geschützt. Dies gewährleistet eine zuverlässige Arbeitsweise und eine hohe Lebensdauer.

Das Modul ist vorzugsweise zwischen Gehäuseteilen der Kreiselpumpeneinheit angeordnet. Insbesondere eignet sich eine Anordnung des Moduls zwischen dem Druckdeckel und dem Lagerträger der Kreiselpumpeneinheit. Dabei erweist es sich als günstig, wenn ein Gehäuseteil des Moduls eine Verbindung zwischen den beiden Gehäuseteilen der Kreiselpumpeneinheit herstellt.

Vorzugsweise ist zumindest ein Federelement in einem stationären Gehäuseteil des Moduls angeordnet. Als besonders günstig erweist es sich, wenn das Gehäuseteil des Moduls Aufnahmen aufweist, in denen die Federelemente angeordnet sind. Bei den Aufnahmen kann es sich beispielsweise um Aussparungen in Form einer Nut handeln.

Bei einer vorteilhaften Variante der Erfindung weist das Gehäuseteil des Moduls Kanäle zur Schmierung der Gleitringdichtungen auf. Die Kanäle stellen eine Verbindung zwischen den Gleitringdichtungen und der Vorlage her, in der sich die Flüssigkeit zur Spülung der Gleitringdichtungen befindet.

Bei einer Variante der Erfindung weist das Modul eine Wellenhülse auf, in der ein rotierender Gegenring angeordnet ist. Dabei erweist es sich als günstig, wenn die Wellenhülse über eine Aufnahme verfügt, in der ein Gegenring angeordnet ist.

Vorzugsweise weist das Modul einen Trägerring für einen Gegenring auf. Dieser Trägerring ist rotierend und steht direkt oder indirekt mit der Welle in Verbindung. Bei einer Variante der Erfindung ist der Trägerring auf einer Wellenhülse angeordnet. Die Wellenhülse wird bis zu einem Anschlag auf die Welle geschoben und rotiert mit der Welle. Der Trägerring ist dabei drehfest mit der Wellenhülse verbunden und rotiert ebenfalls.

Bei einer besonders günstigen Variante der Erfindung weist das Modul ein Deckelteil auf. Durch das Deckelteil wird ein Austreten einer zu großen Menge an Spülflüssigkeit verhindert. In Kombination mit weiteren Nebendichtungen, wie beispielsweise O-Ringen, sorgt das Deckelteil des Moduls für eine Minimierung des Austritts an Spülflüssigkeit.

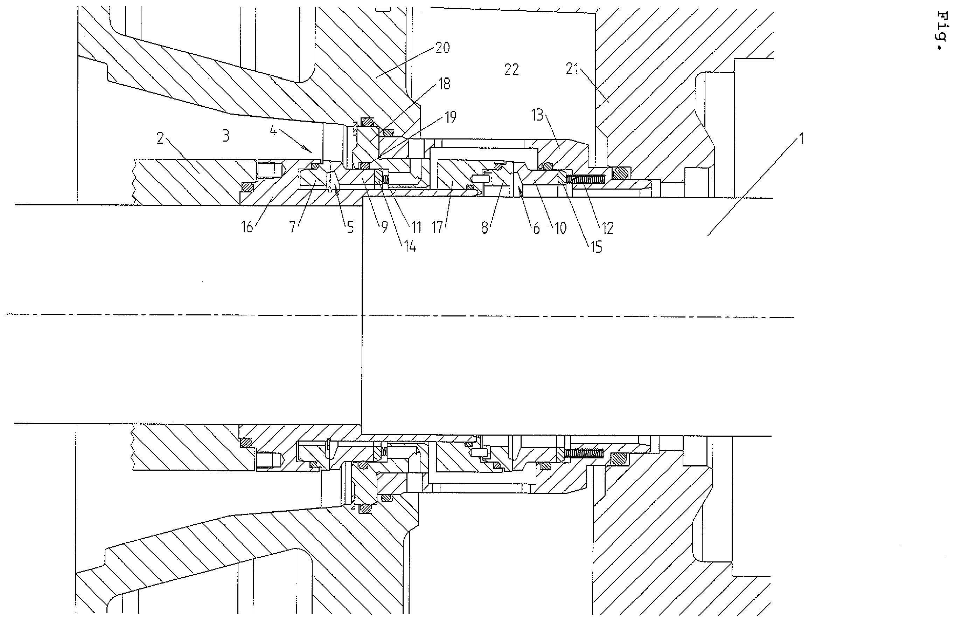

Weitere Merkmale und Vorteile der Erfindung ergeben sich aus der Beschreibung eines Ausführungsbeispiels anhand einer Zeichnung und aus der Zeichnung selbst.

Dabei zeigt die einzige Figur einen Axialschnitt einer Anordnung zur Wellendichtung einer Kreiselpumpeneinheit.

Die Kreiselpumpeneinheit umfasst eine Welle 1, auf der ein Laufrad 2 angeordnet ist, von dem in der Figur lediglich ein Teilbereich sichtbar ist. Das Laufrad 2 ist von einem Raum 3 umgeben, in dem sich Förderflüssigkeit befindet. Durch die erfindungsgemäße Anordnung wird ein Austreten von Förderflüssigkeit aus dem Raum 3 verhindert.

Die Anordnung umfasst ein Modul 4 mit einer ersten Gleitring-Gegenring-Paarung 5 und einer zweiten Gleitring-Gegenring-Paarung 6. Jede Paarung 5, 6 weist jeweils einen rotierenden Gegenring 7, 8 und einen stationären Gleitring 9, 10 auf. Die Gleitringdichtungen sind in Tandemanordnung zueinander positioniert. Dabei ergibt sich von der Pumpenseite bis zur Motorseite folgender Aufbau: erster rotierender Gegenring 7, erster stationärer Gleitring 9, zweiter rotierender Gegenring 8, zweiter stationärer Gleitring 10.

Die Anordnung umfasst Federelemente 11, 12. Erfindungsgemäß sind die Federelemente 11, 12 in stationären Bauteilen angeordnet.

Das Modul 4 weist ein Gehäuseteil 13 auf. Das Gehäuseteil 13 ist mit Aufnahmen versehen, in denen die Federelemente 11, 12 angeordnet sind. Im Ausführungsbeispiel sind die Aufnahmen als Bohrungen ausgeführt. Das Gehäuseteil 13 des Moduls 4 ist stationär und rotiert nicht. Somit sind auch die Federelemente 11, 12 stationär und rotieren ebenfalls nicht.

Das erste Federelement 11 übt eine Anpresskraft auf den Gleitring 9 aus. Der Gleitring 9 ist stationär und axial verschiebbar, Ein Zwischenring 14 überträgt die Kraft des ersten Federelements 11 auf den ersten Gleitring 9. Der erste stationäre Gleitring 9 wird gegen den ersten rotierenden Gegenring 7 gepresst. Der Zwischenring 14 weist einen nicht dargestellten Stift auf. Dadurch wird der Gleitring 9 gegen ein mitdrehen gesichert. Der Zwischenring 14 dient einer Drehsicherung des Gleitrings 9.

Ein zweiter Zwischenring 15 überträgt die Kraft des zweiten Federelements 12 auf den zweiten stationären Gleitring 10 und presst den zweiten Gleitring 10 gegen den zweiten rotierenden Gegenring 8. Der Zwischenring 15 weist einen nicht dargestellten Stift auf. Dadurch wird der Gleitring 10 gegen ein mitdrehen gesichert. Der Zwischenring 15 dient einer Drehsicherung des Gleitrings 10.

Der erste rotierende Gegenring 7 ist in einer Aufnahme einer Wellenhülse 16 angeordnet. Der zweite rotierende Gegenring 8 ist in einer Aufnahme eines Trägerrings 17 angeordnet. Der Trägerring 17 ist drehfest mit der Wellenhülse 16 verbunden. Bei einer Rotation der Welle 1 rotieren sowohl die Wellenhülse 16 als auch der Trägerring 17 mit dem darin angeordneten Gegenring 8.

Das Modul 4 weist ein Deckelteil 18 auf. Das Deckelteil 18 ragt zumindest teilweise in das Gehäuseteil 13 des Moduls 4 hinein. Das Deckelteil 18 weist eine Nut auf, in welcher ein O-Ring 19 angeordnet ist, der an dem ersten stationären Gleitring 9 anliegt. Die Darstellungen umfasst noch mehrere O-Ringe, die als Nebendichtungen dienen, wobei lediglich der O-Ring 19 exemplarisch mit einer Nummer beschriftet ist.

Die Anordnung zur Wellenabdichtung umfasst ein erstes Gehäuseteil 20 und ein zweites Gehäuseteil 21. Bei dem ersten Gehäuseteil 20 der Kreiselpumpeneinheit handelt es sich um einen Druckdeckel. Bei dem zweiten Gehäuseteil 21 der Kreiselpumpeneinheit handelt es sich um einen Lagerträger.

Erfindungsgemäß bilden bei der Anordnung die beiden Gehäuseteile 20, 21 die Wände einer Vorlage 22 in der Flüssigkeit zur Schmierung der Gleitring-Gegenring-Paarungen 5, 6 angeordnet ist. Das Gehäuseteil 13 des Moduls 4 weist Kanäle zur Spülung der Gleitring-Gegenring-Paarungen 5, 6 mit Flüssigkeit aus der Vorlage 22 auf.

## Patentansprüche

1. Anordnung mit einer Wellendichtung und einer Kreiselpumpeneinheit, **gekennzeichnet durch** ein in die Kreiselpumpeneinheit einschiebbares Doppeldichtungsmodul (4) und eine in der Kreiselpumpeneinheit angeordnete Vorlage (22), wobei das Doppeldichtungsmodul (4) eine erste Gleitring-Gegenring-Paarung (5) und eine zweite Gleitring-Gegenring-Paarung (6) aufweist, die Paarungen (5, 6) in Tandemanordnung zueinander positioniert sind und jeder Paarung (5, 6) ein Federelement (11, 12) zugeordnet ist zur Erzeugung einer Anpresskraft zwischen Gleitring (9, 10) und Gegenring (7, 8), die Federelemente (11, 12) in stationären Bauteilen angeordnet sind und ein Raum zwischen den Gleitring-Gegenring-Paarungen (5, 6) mit einer Flüssigkeit aus der Vorlage (22) durchspült wird.

2. Anordnung nach Anspruch 1, **dadurch gekennzeichnet, dass** Wände der Vorlage (22) von Gehäuseteilen (20, 21) der Kreiselpumpeneinheit gebildet werden, insbesondere von einem Druckdeckel und/oder einem Lagerträger.

3. Anordnung nach einem der Ansprüche 1 oder 2, **dadurch gekennzeichnet, dass** das Modul (4) einen Boden der Vorlage (22) bildet.

4. Anordnung nach einem der Ansprüche 1 bis 3, **dadurch gekennzeichnet, dass** das Modul (4) zwischen Gehäuseteilen (20, 21) der Kreiselpumpeneinheit, insbesondere zwischen einem Druckdeckel und einem Lagerträger angeordnet ist.

5. Anordnung nach einem der Ansprüche 1 bis 4, **dadurch gekennzeichnet, dass** ein Gehäuseteil (13) des Moduls (4) eine Verbindung zwischen Gehäuseteilen (20, 21) der Kreiselpumpeneinheit herstellt.

6. Anordnung nach einem der Ansprüche 1 bis 5, **dadurch gekennzeichnet, dass** zumindest ein Federelement (12) in einem Gehäuseteil (13) des Moduls (4) angeordnet ist.

7. Anordnung nach einem der Ansprüche 1 bis 6, **dadurch gekennzeichnet, dass** in einem Gehäuseteil (13) des Moduls (4) Kanäle zur Schmierung der Gleitring-Gegenring-Paarungen (5, 6) mit Flüssigkeit aus der Vorlage (22) angeordnet sind.

8. Anordnung nach einem der Ansprüche 1 bis 7, **dadurch gekennzeichnet, dass** das Modul (4) eine Wellenhülse (16) umfasst, die eine Aufnahme für einen rotierenden Gegenring (7) aufweist.

9. Anordnung nach einem der Ansprüche 1 bis 8, **dadurch gekennzeichnet, dass** das Modul (4) einen Trägerring (17) zur Aufnahme eines rotierenden Gegenrings (8) aufweist.

10. Anordnung nach einem der Ansprüche 1 bis 9, **dadurch gekennzeichnet, dass** das Modul (4) ein Deckelteil (18) aufweist.

## Claims

1. Assembly having a shaft seal and a centrifugal pump unit, **characterized by** a double-seal module (4) that is insertable into the centrifugal pump unit and a well (22) that is disposed in the centrifugal pump unit, wherein the double-seal module (4) has a first sliding-ring/counter-ring pairing (5) and a second sliding-ring/counter-ring pairing (6), the pairings (5, 6) are mutually positioned in a tandem arrangement, and each pairing (5, 6) is assigned one spring element (11, 12) for generating a contact pressure force between the sliding ring (9, 10) and the counter ring (7, 8), the spring elements (11, 12) are disposed in stationary components, and a space between the sliding-ring/counter-ring pairings (5, 6) is purged with a liquid from the well (22).

2. Assembly according to Claim 1, **characterized in that** walls of the well (22) are formed by housing parts (20, 21) of the centrifugal pump unit, in particular by a pressure cover and/or a bearing support.

3. Assembly according to one of Claims 1 or 2, **characterized in that** the module (4) forms a base of the well (22).

4. Assembly according to one of Claims 1 to 3, **characterized in that** the module (4) is disposed between housing parts (20, 21) of the centrifugal pump unit, in particular between a pressure cover and a bearing support.

5. Assembly according to one of Claims 1 to 4, **characterized in that** a housing part (13) of the module (4) establishes a connection between housing parts (20, 21) of the centrifugal pump unit.

6. Assembly according to one of Claims 1 to 5, **characterized in that** the at least one spring element (12) is disposed in a housing part (13) of the module (4).

7. Assembly according to one of Claims 1 to 6, **characterized in that** ducts for lubricating the sliding-ring/counter-ring pairings (5, 6) with a liquid from the well (22) are disposed in a housing part (13) of the module (4).

8. Assembly according to one of Claims 1 to 7, **characterized in that** the module (4) comprises a shaft sleeve (16) which has a receptacle for a rotating counter ring (7).

9. Assembly according to one of Claims 1 to 8, **characterized in that** the module (4) has a support ring (17) for receiving a rotating counter ring (8).

10. Assembly according to one of Claims 1 to 9, **characterized in that** the module (4) has a cover part (18).

## Revendications

1. Agencement comprenant une étanchéité d'arbre et une unité de pompe centrifuge, **caractérisé par** un module d'étanchéité double (4) insérable dans l'unité de pompe centrifuge et un espace (22) disposé dans l'unité de pompe centrifuge, dans lequel le module d'étanchéité double (4) présente une première paire bague glissante/contre-bague (5) et une seconde paire bague glissante/contre-bague (6), les paires (5, 6) sont disposées en tandem l'une par rapport à l'autre et à chaque paire (5, 6) est associé un élément de ressort (11, 12) pour la production d'une force de pression entre la bague glissante (9, 10) et la contre-bague (7, 8), les éléments de ressort (11, 12) sont disposés dans des pièces stationnaires et une chambre entre les paires bague glissante/contre-bague (5, 6) est balayée par un liquide venant de l'espace (22).

2. Agencement selon la revendication 1, **caractérisé en ce que** des parois de l'espace (22) sont formées par des parties de boîtier (20, 21) de l'unité de pompe centrifuge, en particulier par un couvercle de pression et/ou un support de palier.

3. Agencement selon une des revendications 1 ou 2, **caractérisé en ce que** le module (4) forme un fond de l'espace (22).

4. Agencement selon l'une quelconque des revendications 1 à 3, **caractérisé en ce que** le module (4) est disposé entre des parties de boîtier (20, 21) de l'unité de pompe centrifuge, en particulier entre un couvercle de pression et un support de palier.

5. Agencement selon l'une quelconque des revendications 1 à 4, **caractérisé en ce qu'**une partie de boîtier (13) du module (4) établit une liaison entre des parties de boîtier (20, 21) de l'unité de pompe centrifuge.

6. Agencement selon l'une quelconque des revendications 1 à 5, **caractérisé en ce qu'**au moins un élément de ressort (12) est disposé dans une partie de boîtier (13) du module (4).

7. Agencement selon l'une quelconque des revendications 1 à 6, **caractérisé en ce que** des canaux sont disposés dans une partie de boîtier (13) du module (4) pour la lubrification de la paire bague glissante/contre-bague (5, 6) avec du liquide venant de l'espace (22).

8. Agencement selon l'une quelconque des revendications 1 à 7, **caractérisé en ce que** le module (4) comprend une douille d'arbre (16), qui présente un logement pour une contre-bague tournante (7).

9. Agencement selon l'une quelconque des revendications 1 à 8, **caractérisé en ce que** le module (4) présente une bague de support (17) destinée à recevoir une contre-bague tournante (8).

10. Agencement selon l'une quelconque des revendications 1 à 9, **caractérisé en ce que** le module (4) présente une partie de couvercle (18).
